# FASCICULE DE BREVET EUROPEEN

(11) **EP 3 607 278 B1**
(45) Date de publication et mention de la délivrance du brevet: **19.10.2022**
(21) Numéro de dépôt: 18713289.9
(22) Date de dépôt: 30.03.2018
(51) Int. Cl.: G01F 1/66, G01N 21/3504

(54) **COMPTEUR DE FLUIDE**
FLUIDMESSER
FLUID METER

(30) Priorité: 05.04.2017 FR 1752979
(43) Date de publication de la demande: 12.02.2020
(73) Titulaire: Sagemcom Energy & Telecom SAS, 92500 Rueil-Malmaison (FR)
(72) Inventeur: SABATIER, Pierre, 92500 Rueil Malmaison (FR); ALEGRE, Thierry, 92500 Rueil Malmaison (FR)
(74) Mandataire: Lavaud, Thomas
(86) Numéro de dépôt international: PCT/EP2018/058350
(87) Numéro de publication internationale: WO 2018/185034

(56) Documents cités:
- EP-A2- 1 273 888
- EP-A2- 1 734 347
- WO-A1-2014/166734
- DE-A1- 4 409 589
- DE-A1-102005 005 727
- FR-A1- 2 724 226
- FR-A1- 2 776 776
- JP-A- H09 269 286
- US-A- 3 741 009
- US-A- 4 546 649
- US-A1- 2002 108 437

## Description

L'invention concerne le domaine des compteurs de fluide.

### ARRIERE PLAN DE L'INVENTION

Un compteur de gaz est destiné à évaluer la consommation de gaz d'une installation d'un client pour pouvoir facturer la consommation de gaz au client.

Un compteur de gaz comporte classiquement à cet effet un canal principal et un dispositif de mesure de débit du gaz par émission et réception de signaux ultrasonores.

Pour mesurer le débit du gaz, on évalue la vitesse du gaz dans le canal principal en émettant dans le canal principal un signal ultrasonore parcourant un trajet de longueur définie et en mesurant les temps de trajet mis par le signal ultrasonore pour parcourir le trajet de longueur définie d'amont en aval et d'aval en amont. On estime alors la vitesse du gaz à partir de la longueur définie et de la différence entre les temps de trajet, et on déduit de la vitesse du gaz le débit du gaz.

Or, la facturation de la consommation de gaz ne dépend pas uniquement du débit du gaz (ou du volume du gaz consommé), mais est basée sur l'énergie fournie à l'installation. Il convient donc, pour facturer la consommation de gaz, de convertir le débit du gaz en énergie. Pour réaliser la conversion de débit du gaz en énergie, on tient compte de la composition du gaz ainsi que de la pression et de la température régnant au niveau de l'installation. Un ensemble de capteurs, mesurant à la fois le débit et la composition d'un gaz combustible afin de déterminer son énergie calorifique, fait partie de l'état de l'art suivant la publication FR 2 776 776 A1.

Le gaz fourni résulte d'un mélange de différents gaz injectés dans le réseau et provenant de différentes sources. La composition du gaz est mesurée grâce à des appareils de mesure installés en entrée du réseau de distribution de gaz et au niveau de quelques points intermédiaires dans le réseau de distribution de gaz. La composition du gaz mesurée ne correspond donc pas exactement au gaz fourni à l'installation. L'évaluation de l'énergie fournie à l'installation et la facturation de la consommation de gaz sont donc imprécises.

### OBJET DE L'INVENTION

L'invention a pour objet d'améliorer la précision de la facturation d'un fluide fourni à une installation.

### RESUME DE L'INVENTION

En vue de la réalisation de ce but, on propose un compteur de fluide comportant un canal principal et un dispositif de mesure de débit destiné à mesurer un débit du fluide circulant dans le canal principal, le compteur de fluide comportant en outre un dispositif de mesure d'une composition du fluide comprenant :
- des cloisons définissant une chambre ;
- au moins un orifice d'entrée pratiqué dans l'une des cloisons, l'orifice d'entrée étant agencé pour qu'une portion de fluide pénètre dans la chambre ;
- un émetteur infrarouge et un récepteur infrarouge situés dans la chambre et agencés pour mesurer la composition de la portion de fluide par spectroscopie infrarouge, l'orifice d'entrée débouchant dans la chambre à proximité de l'émetteur infrarouge ou du récepteur infrarouge ;
- un conduit mettant en communication la chambre et le canal principal, le conduit étant agencé pour que la portion de fluide soit aspirée de la chambre par effet Venturi pour s'échapper de la chambre et pénétrer dans le canal principal, le conduit débouchant dans le canal principal en amont de l'orifice d'entrée et en amont du dispositif de mesure de débit.

Le compteur de fluide selon l'invention comporte donc un dispositif de mesure de la composition du fluide, qui est intégré au compteur de fluide. La composition du fluide utilisée pour facturer au client la consommation de fluide correspond donc précisément au fluide consommé et peut être évaluée dynamiquement pour prendre en compte d'éventuelles variations de la composition du fluide.

Le choix de la spectroscopie infrarouge pour mesurer la composition du fluide, et l'utilisation de l'émetteur infrarouge et du récepteur infrarouge positionnés dans la chambre, permettent d'obtenir un dispositif de mesure de la composition du fluide compact et facilement intégrable dans le compteur de fluide.

On note que, comme le conduit du dispositif de mesure de la composition du fluide débouche dans le canal principal en amont du dispositif de mesure de débit, la portion de fluide utilisée pour mesurer la composition du fluide est bien prise en compte pour mesurer le débit. La mesure de la composition du fluide ne dégrade donc pas la précision de la mesure du débit du fluide.

Par ailleurs, comme l'orifice d'entrée débouche dans la chambre à proximité de l'émetteur infrarouge ou du récepteur infrarouge, la portion de fluide qui pénètre dans la chambre balaie l'émetteur infrarouge ou le récepteur infrarouge et évite ainsi tout dépôt de poussière sur l'émetteur infrarouge ou sur le récepteur infrarouge. Bien sûr, l'utilisation de deux orifices d'entrées, l'un débouchant à proximité de l'émetteur infrarouge et l'autre à proximité du récepteur infrarouge, permet de balayer à la fois l'émetteur infrarouge et le récepteur infrarouge.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :
- la figure 1 représente un compteur de fluide selon l'invention ;
- la figure 2 représente un canal principal, un dispositif de mesure de débit et un dispositif de mesure d'une composition du fluide du compteur de fluide selon l'invention ;
- la figure 3 est une vue équivalente à celle de la figure 2, en perspective et avec une orientation différente ;
- la figure 4 est une vue en coupe selon le plan IV-IV d'un conduit du dispositif de mesure de la composition du fluide ;
- la figure 5 est une vue équivalente à celle de la figure 3, de dessous et écorchée au niveau du conduit.

### DESCRIPTION DETAILLEE DE L'INVENTION

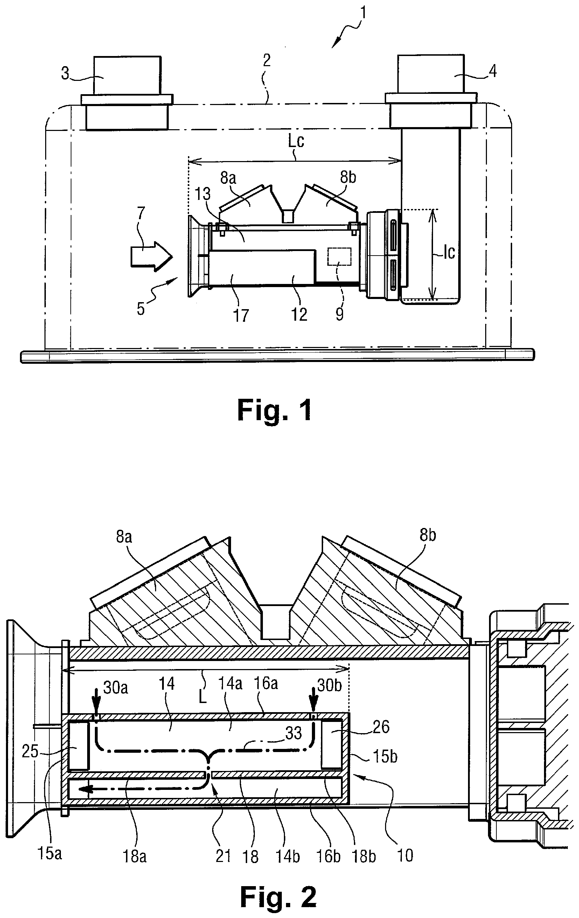

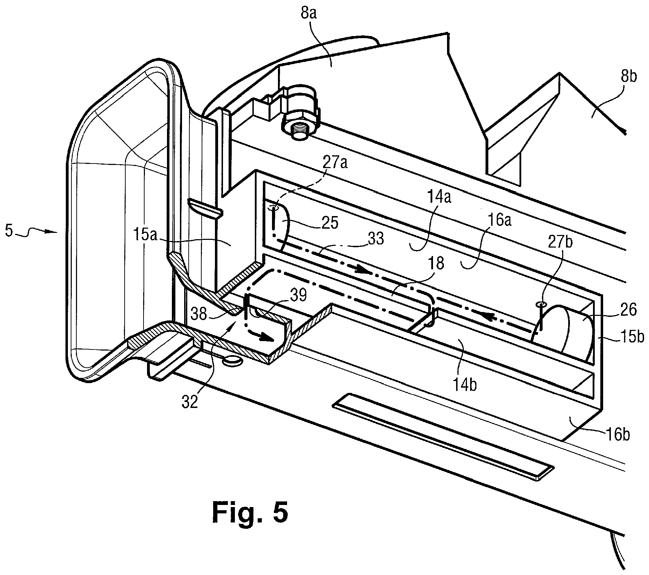

En référence aux figure 1 à 5, le compteur de fluide selon l'invention est ici un compteur de gaz 1 comportant un caisson étanche 2 comprenant un port d'entrée 3 et un port de sortie 4. Le port d'entrée 3 et le port de sortie 4 permettent de raccorder le compteur de gaz 1 à un tuyau qui relie un réseau de distribution de gaz à une installation consommatrice du gaz.

Le compteur de gaz 1 comporte de plus un canal principal 5 et un dispositif de mesure de débit destiné à mesurer un débit du gaz circulant dans le canal principal 5. La longueur Lc du canal principal 5 est d'environ 100mm, et la largeur lc du canal principal 5 au niveau de sa sortie est d'environ 30mm.

Le gaz circule dans le canal principal 5 d'amont en aval, selon le sens de la flèche 7.

Des plaquettes 6 sont positionnées en entrée du canal principal 5. Les plaquettes 6 s'étendent dans des plans parallèles à des parois latérales du canal principal 5. Les plaquettes 6 permettent d'assurer que l'écoulement du gaz dans le canal principal 5 est un écoulement laminaire et non turbulent. On améliore grâce à ces plaquettes 6 la précision de la mesure du débit du gaz.

Le dispositif de mesure de débit du gaz comporte un premier transducteur ultrasonore 8a, un deuxième transducteur ultrasonore 8b et un module de mesure 9 (représenté schématiquement sur la figure 1). Le module de mesure 9 comprend un processeur. Le module de mesure 9 pilote le premier transducteur ultrasonore 8a et le deuxième transducteur ultrasonore 8b et effectue des traitements sur les mesure de débit du gaz.

Pour mesurer le débit du gaz, le module de mesure 9 évalue la vitesse du gaz dans le canal principal 5.

Le module de mesure 9 produit pour cela un signal électrique et le transmet au premier transducteur ultrasonore 8a qui émet un signal ultrasonore de mesure. Le signal ultrasonore de mesure parcourt un trajet de longueur définie d'amont en aval et est reçu par le deuxième transducteur ultrasonore 8b. Le module de mesure 9 évalue alors un temps de trajet d'amont en aval mis par le signal ultrasonore de mesure pour parcourir le trajet de longueur définie d'amont en aval.

Puis, le module de mesure 9 produit un signal électrique et le transmet au deuxième transducteur ultrasonore 8b qui émet un signal ultrasonore de mesure. Le signal ultrasonore de mesure parcourt le trajet de longueur définie d'aval en amont et est reçu par le premier transducteur ultrasonore 8a. Le module de mesure 9 évalue alors un temps de trajet d'aval en amont mis par le signal ultrasonore de mesure pour parcourir le trajet de longueur définie d'aval en amont.

Le module de mesure 9 évalue alors la vitesse du gaz et donc le débit du gaz à partir de la différence entre le temps de trajet d'amont en aval et le temps de trajet d'aval en amont.

Le débit minimal du gaz dans le canal principal 5 est de l'ordre de 0,3 l/mn, ce qui donne une vitesse moyenne du gaz dans le canal principal 5 d'environ 2,5 cm/s.

Le débit maximal du gaz dans le canal principal 5 est de l'ordre de 170 l/mn, ce qui donne une vitesse moyenne du gaz dans le canal principal 5 d'environ 1m/s.

Le compteur de gaz 1 comporte en outre un dispositif de mesure d'une composition du gaz 10.

Le dispositif de mesure d'une composition du gaz 10 comprend un boîtier 12 situé sur une paroi latérale 13 du canal principal 5, à l'extérieur du canal principal 5.

Le boîtier 12 a une forme de parallélépipède rectangle.

Le boîtier 12 est constitué par une pluralité de cloisons définissant une chambre 14 à l'intérieur du boîtier 12. Les cloisons comprennent deux premières cloisons 15a, 15b parallèles entre elles et perpendiculaires à la paroi latérale 13 du canal principal 5, deux deuxièmes cloisons 16a, 16b parallèles entre elles et perpendiculaires aux premières cloisons 15, une cloison avant 17 (transparente sur les figures 2, 3 et 5), et une cloison interne 18. Une portion de la paroi latérale 13 du canal principal 5 forme une cloison arrière du boîtier 12.

Parmi les deux deuxièmes cloisons 16, on trouve une deuxième cloison supérieure 16a et une deuxième cloison inférieure 16b.

La cloison interne 18 est parallèle aux deuxièmes cloisons 16a, 16b et divise la chambre 14 en un premier compartiment 14a et en un deuxième compartiment 14b. Le premier compartiment 14a est un compartiment supérieur, de sorte que la deuxième cloison supérieure 16a forme une cloison supérieure du premier compartiment 14a. Le deuxième compartiment 14b est un compartiment inférieur, de sorte que la deuxième cloison inférieure 16b forme une cloison inférieure du deuxième compartiment 14b.

La cloison interne 18 comporte une ouverture 21 qui est ici formée dans une portion centrale de la cloison interne 18. L'ouverture 21 est en réalité un espace entre une première moitié de cloison interne 18a et une deuxième moitié de cloison interne 18b.

A l'intérieur de la chambre 14 sont situés un émetteur infrarouge 25 et un récepteur infrarouge 26.

L'émetteur infrarouge 25 comporte une diode électroluminescente pour émettre des signaux de mesure infrarouges. Le récepteur infrarouge 26 comporte un capteur pour recevoir les signaux de mesure infrarouges.

L'émetteur infrarouge 25 et le récepteur infrarouge 26 sont tous deux connectés au module de mesure 9.

L'émetteur infrarouge 25 et le récepteur infrarouge 26 sont situés à l'intérieur du premier compartiment 14a de la chambre 14.

L'émetteur infrarouge 25 est positionné sur la première cloison 15a, alors que le récepteur infrarouge 26 est positionné sur la première cloison 15b.

L'émetteur infrarouge 25 et le récepteur infrarouge 26 sont donc situés en face l'un de l'autre.

Un premier orifice d'entrée 27a et un deuxième orifice d'entrée 27b sont pratiqués dans la deuxième cloison supérieure 16a. Le premier orifice d'entrée 27a et le deuxième orifice d'entrée 27b sont des trous de forme circulaire et de faible diamètre.

Le premier orifice d'entrée 27a est situé à proximité de l'émetteur infrarouge 25, au-dessus de l'émetteur infrarouge 25. Le premier orifice d'entrée 27a débouche dans le premier compartiment 14a de la chambre 14 au regard de l'émetteur infrarouge 25. Le premier orifice d'entrée 27a est situé à l'intérieur d'une zone 28a définie par une distance La à la première paroi 15a sur laquelle est positionné l'émetteur infrarouge 25. La distance La est ici égale au quart de la longueur L des deuxièmes cloisons 16.

Le deuxième orifice d'entrée 27b est situé à proximité du récepteur infrarouge 26, au-dessus du récepteur infrarouge 26. Le deuxième orifice d'entrée 27b débouche dans le premier compartiment 14a de la chambre 14 au regard du récepteur infrarouge 26. Le deuxième orifice d'entrée 27b est situé à l'intérieur d'une zone 28b définie par une distance Lb à la première paroi 15b sur laquelle est positionné le récepteur infrarouge 26. La distance Lb est ici égale au quart de la longueur L des deuxièmes cloisons 16.

Lorsque le compteur de gaz 1 est raccordé au tuyau qui relie le réseau de distribution de gaz à l'installation consommatrice du gaz, le caisson étanche 2 est rempli de gaz.

Le gaz circule dans le canal principal 5 d'amont en aval pour être dirigé, via le canal principal 5 et le port de sortie 4, vers l'installation consommatrice du gaz.

Une première portion de gaz 30a pénètre alors dans le premier compartiment 14a de la chambre 14 via le premier orifice d'entrée 27a, et une deuxième portion de gaz 30b pénètre alors dans le premier compartiment 14a de la chambre 14 via le deuxième orifice d'entrée 27b.

L'émetteur infrarouge 25 émet un signal de mesure infrarouge. Le signal de mesure infrarouge traverse le premier compartiment 14a de la chambre 14 rempli par la première portion de gaz 30a et par la deuxième portion de gaz 30b, et est reçu par le récepteur infrarouge 26.

Le module de mesure 9 acquiert un signal de mesure électrique généré par le récepteur infrarouge 26 à partir du signal de mesure infrarouge reçu.

Le signal de mesure électrique est numérisé. Le processeur du module de mesure 9 effectue des calculs sur le signal de mesure électrique numérisé pour définir et traiter le spectre infrarouge du signal de mesure infrarouge reçu. Le module de mesure 9 produit ainsi des fractions molaires du gaz et obtient la composition du gaz. Le module de mesure 9 peut aussi effectuer des compensations des mesures de débit du gaz en pression, température et compression (compensation PZT).

Grâce aux faibles tailles du premier orifice d'entrée 27a et du deuxième orifice d'entrée 27b, la vitesse du gaz est relativement importante lorsque la première portion de gaz 30a pénètre dans le premier compartiment 14a de la chambre 14 via le premier orifice d'entrée 27a, et la vitesse du gaz est relativement importante lorsque la deuxième portion de gaz 30b pénètre dans le premier compartiment 14a de la chambre 14 via le deuxième orifice d'entré 30b.

On obtient ainsi un premier filet de gaz et un deuxième filet de gaz qui balayent avec un débit important respectivement la surface de l'émetteur infrarouge 25 et la surface du récepteur infrarouge 26. On empêche ainsi le dépôt de poussière sur l'émetteur infrarouge 25 et sur le récepteur infrarouge 26.

Le dispositif de mesure de la composition du fluide comporte en outre un conduit 32 qui met en communication le deuxième compartiment 14b de la chambre 14 et le canal principal 5. Le conduit 32 est agencé pour que la première portion de fluide 30a et la deuxième portion de fluide 30b soient aspirées de la chambre 14 par effet Venturi pour s'échapper de la chambre 14 et pénétrer dans le canal principal 5.

Ainsi, la première portion de gaz 30a et la deuxième portion de gaz 30b entrent dans le premier compartiment 14a de la chambre 14 respectivement via le premier orifice d'entrée 27a et le deuxième orifice d'entrée 27b, puis sont aspirées pour pénétrer dans le deuxième compartiment 14b de la chambre 14 via l'ouverture 21 de la cloison interne 18, et sortent ensuite de la chambre 14 via le conduit 32 pour pénétrer dans le canal principal 5. Le gaz suit donc le chemin 33. Le premier orifice d'entrée 27a et le deuxième orifice d'entrée 27b permettent d'assurer que le premier compartiment 14a de la chambre 14 est rempli de gaz en permanence.

On note qu'une portion du dispositif de mesure d'une composition du gaz 10 s'étend en aval d'au moins une portion du dispositif de mesure de débit. Ici, par exemple, sur la figure 2, la deuxième moitié de cloison interne 18b est positionnée à droite (ou en aval, en tenant compte du sens de circulation du gaz) d'une partie gauche (ou partie amont) du premier transducteur ultrasonore 8a.

Le conduit 32 du dispositif de mesure d'une composition du gaz 10 débouche dans le canal principal 5 en amont du premier orifice d'entrée 27a et du deuxième orifice d'entrée 27b. Le conduit 32 du dispositif de mesure d'une composition du gaz 10 débouche par ailleurs dans le canal principal 5 en amont du dispositif de mesure du débit du gaz, et donc en amont du premier transducteur ultrasonore 8a et du deuxième transducteur ultrasonore 8b. Ainsi, le débit du gaz mesuré correspond à la totalité du volume du gaz qui circule dans le canal principal 5 pour être distribué à l'installation consommatrice du gaz via le canal principal 5 et le port de sortie 4.

Une section amont SI du canal principal 5 en amont et à proximité du conduit 32 est inférieure à une section aval S2 du canal principal 5 en aval et à proximité du conduit.

Le canal principal 5 présente donc un rétrécissement local au niveau du conduit 32.

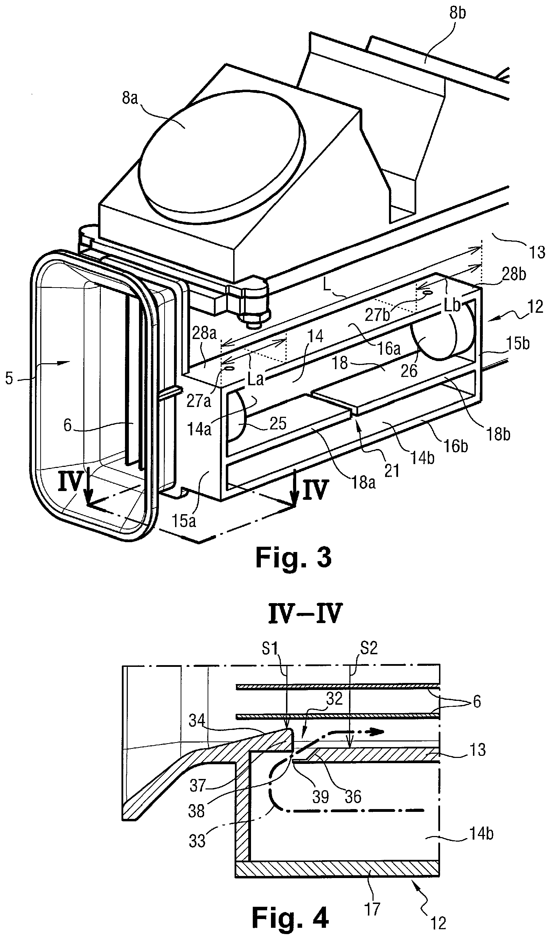

Le rétrécissement local tend à accélérer le gaz à l'endroit où le conduit 32 débouche dans le canal principal 5. L'accélération du gaz créé une dépression par effet Venturi, qui aspire le gaz présent dans le chambre 14 vers le canal principal 5 (voir à nouveau le chemin 33 sur la figure 4).

Le rétrécissement local résulte notamment d'une inclinaison de la pente 34 de la paroi latérale 13 en amont du conduit 32 et à proximité du conduit 32. L'inclinaison de la pente dirige localement le flux du gaz vers le centre du canal principal 5. L'inclinaison de la pente 34 augmente par ailleurs l'accélération du gaz à proximité du conduit 32 et permet d'éviter qu'une portion du gaz ne pénètre dans la chambre 14 via le conduit 32.

Le conduit 32 est une fente pratiquée dans la paroi latérale 13. La fente est définie par une première extrémité locale 36 et une deuxième extrémité locale 37 de la paroi latérale 13, en face l'une de l'autre. La première extrémité locale 36 de la paroi latérale 13 est en forme de biseau. La deuxième extrémité locale 37 est en forme d'angle droit.

Une arête 38 de la deuxième extrémité locale 37 en forme d'angle droit est plus proche du canal principal 5 qu'une arête 39 de la première extrémité locale 36 en forme de biseau. Ceci permet d'éviter un effet tourbillonnaire du gaz qui aurait tendance à s'opposer au passage du gaz du deuxième compartiment 14b de la chambre 14 vers le canal principal 5.

On note que le deuxième compartiment 14b d'une part, et la position centrale de l'ouverture 21 de la paroi interne 18 qui sépare la chambre d'autre part, permettent de maintenir une répartition homogène du gaz dans le premier compartiment 14a de la chambre 14. En effet, comme le conduit 32 par lequel s'échappe le gaz de la chambre 14 est excentré par rapport à la chambre 14, l'utilisation d'un seul compartiment tendrait à concentrer le gaz du côté du conduit 32.

Bien entendu, l'invention n'est pas limitée au mode de réalisation décrit mais englobe toute variante entrant dans le champ de l'invention telle que définie par les revendications.

Bien que l'on ait ici décrit un compteur de gaz, l'invention peut être mise en œuvre sur un compteur de tout type de fluide. De même, le débit n'est pas mesuré nécessairement en émettant et en recevant des signaux ultrasonores : tout type de dispositif de mesure de débit peut être utilisé.

## Revendications

1. Compteur de fluide (1) comportant un canal principal (5) et un dispositif de mesure de débit (8a, 8b, 9) destiné à mesurer un débit du fluide circulant dans le canal principal (5), le compteur de fluide (1) comportant en outre un dispositif de mesure d'une composition du fluide (10) comprenant :
- des cloisons (15a, 15b, 16a, 16b, 17, 18) définissant une chambre (14) ;
- au moins un orifice d'entrée (27a, 27b) pratiqué dans l'une des cloisons, l'orifice d'entrée étant agencé pour qu'une portion de fluide (30a, 30b) pénètre dans la chambre (14);
- un émetteur infrarouge (25) et un récepteur infrarouge (26) situés dans la chambre et agencés pour mesurer la composition de la portion de fluide (30a, 30b) par spectroscopie infrarouge, l'orifice d'entrée (27a, 27b) débouchant dans la chambre à proximité de l'émetteur infrarouge (25) ou du récepteur infrarouge (26);
- un conduit (32) mettant en communication la chambre (14) et le canal principal (5), le conduit (32) étant agencé pour que la portion de fluide (30a, 30b) soit aspirée de la chambre (14) par effet Venturi pour s'échapper de la chambre (14) et pénétrer dans le canal principal (5), le conduit (32) débouchant dans le canal principal (5) en amont de l'orifice d'entrée (27a, 27b) et en amont du dispositif de mesure de débit (8a, 8b, 9).

2. Compteur de fluide (1) selon la revendication 1, comportant un premier orifice d'entrée (27a) débouchant dans la chambre (14) à proximité de l'émetteur infrarouge (25) et un deuxième orifice d'entrée (27b) débouchant dans la chambre (14) à proximité du récepteur infrarouge (26).

3. Compteur de fluide (1) selon la revendication 2, dans lequel les cloisons (15a, 15b, 16a, 16b, 17, 18) comprennent deux premières cloisons (15a, 15b) parallèles entre elles et une deuxième cloison (16a) perpendiculaire aux deux premières cloisons (15a, 15b), l'émetteur infrarouge (25) et le récepteur infrarouge (26) étant chacun positionnés sur une des deux premières cloisons (15a, 15b) distincte, le premier orifice d'entrée (27a) et le deuxième orifice d'entrée (27b) étant pratiqués dans la deuxième cloison (16a), le premier orifice d'entrée (27a) débouchant dans la chambre (14) au regard de l'émetteur infrarouge (25) et le deuxième orifice d'entrée (27b) débouchant dans la chambre (14) au regard du récepteur infrarouge (26).

4. Compteur de fluide (1) selon la revendication 1, dans lequel les cloisons (15a, 15b, 16a, 16b, 17, 18) comprennent une cloison interne (18) qui comporte une ouverture (21) et qui divise la chambre (14) en un premier compartiment (14a) et en un deuxième compartiment (14b), l'émetteur infrarouge (25) et le récepteur infrarouge (26) étant positionnés dans le premier compartiment (14a), le conduit (32) débouchant dans le deuxième compartiment (14b).

5. Compteur de fluide (1) selon la revendication 4, dans lequel l'ouverture (21) de la cloison interne (18) est formée dans une portion centrale de la cloison interne (18) .

6. Compteur de fluide (1) selon la revendication 1, dans lequel une section amont (S1) du canal principal (5) en amont et à proximité du conduit (32) est inférieure à une section aval (32) du canal principal (5) en aval et à proximité du conduit (32).

7. Compteur de fluide (1) selon la revendication 1, dans lequel le conduit (32) est une fente définie entre une première extrémité locale (36) et une deuxième extrémité locale (37) d'une paroi (13) du canal principal (5), la première extrémité locale (36) ayant une forme de biseau et la deuxième extrémité locale (37) ayant une forme d'angle droit.

8. Compteur de fluide (1) selon la revendication 7, dans lequel une arête (38) de la deuxième extrémité locale (37) est plus proche du canal principal (5) qu'une arête (39) de la première extrémité locale (36).

## Patentansprüche

1. Fluidzähler (1), umfassend einen Hauptkanal (5) und eine Durchflussmessvorrichtung (8a, 8b, 9), die dazu bestimmt ist, eine Durchflussmenge des in dem Hauptkanal (5) fließenden Fluids zu messen, wobei der Fluidzähler (1) ferner eine Messvorrichtung (10) zum Messen einer Zusammensetzung des Fluids enthält, die umfasst:
- Trennwände (15a, 15b, 16a, 16b, 17, 18), die eine Kammer (14) definieren;
- mindestens eine Einlassöffnung (27a, 27b), die in einer der Trennwände ausgebildet ist, wobei die Einlassöffnung ausgebildet ist, damit ein Fluidanteil (30a, 30b) in die Kammer (14) eintritt;
- ein Infrarotsender (25) und ein Infrarotempfänger (26), die sich in der Kammer befinden und ausgebildet sind, die Zusammensetzung des Fluidanteils (30a, 30b) durch Infrarotspektroskopie zu messen, wobei die Einlassöffnung (27a, 27b) in die Kammer in der Nähe des Infrarotsenders (25) oder des Infrarotempfängers (26) mündet;
- eine Leitung (32), die die Kammer (14) und den Hauptkanal (5) in Verbindung bringt, wobei die Leitung (32) ausgebildet ist, damit der Fluidanteil (30a, 30b) durch Venturi-Effekt aus der Kammer (14) gesaugt wird, um aus der Kammer (14) auszuströmen und in den Hauptkanal (5) einzutreten, wobei die Leitung (32) stromaufwärts der Einlassöffnung (27a, 27b) und stromaufwärts der Durchflussmessvorrichtung (8a, 8b, 9) in den Hauptkanal (5) mündet.

2. Fluidzähler (1) nach Anspruch 1, umfassend eine erste Einlassöffnung (27a), die in die Kammer (14) in der Nähe des Infrarotsenders (25) mündet, und eine zweite Einlassöffnung (27b), die in die Kammer (14) in der Nähe des Infrarotempfängers (26) mündet.

3. Fluidzähler (1) nach Anspruch 2, bei dem die Trennwände (15a, 15b, 16a, 16b, 17, 18) zwei erste Trennwände (15a, 15b) umfassen, die parallel zueinander sind, und eine zweite Trennwand (16a), die senkrecht zu den beiden ersten Trennwänden (15a, 15b) ist, wobei der Infratossender (25) und der Infrarotempfänger (26) jeweils an einer separaten der beiden ersten Trennwände (15a, 15b) positioniert sind, wobei die erste Einlassöffnung (27a) und die zweite Einlassöffnung (27b) in der zweiten Trennwand (16a) ausgebildet sind, wobei die erste Einlassöffnung (27a) in die Kammer (14) gegenüber dem Infrarotsender (25) mündet und die zweite Einlassöffnung (27b) in die Kammer (14) gegenüber dem Infrarotempfänger (26) mündet.

4. Fluidzähler (1) nach Anspruch 1, bei dem die Trennwände (15a, 15b, 16a, 16b, 17, 18) eine innere Trennwand (18) umfassen, die eine Öffnung (21) enthält und die die Kammer (14) in einen ersten Kammerabschnitt (14a) und in einen zweiten Kammerabschnitt (14b) unterteilt, wobei der Infrarotsender (25) und der Infrarotempfänger (26) in dem ersten Kammerabschnitt (14a) positioniert sind, wobei die Leitung (32) in den zweiten Kammerabschnitt (14b) mündet.

5. Fluidzähler (1) nach Anspruch 4, bei dem die Öffnung (21) der inneren Trennwand (18) in einem zentralen Abschnitt der inneren Trennwand (18) ausgebildet ist.

6. Fluidzähler (1) nach Anspruch 1, bei dem ein stromaufwärtiger Querschnitt (S1) des Hauptkanals (5) stromaufwärts und in der Nähe der Leitung (32) kleiner ist als ein stromabwärtiger Querschnitt (32) des Hauptkanals (5) stromabwärts und in der Nähe der Leitung (32).

7. Fluidzähler (1) nach Anspruch 1, bei dem die Leitung (32) ein Spalt ist, der zwischen einem ersten lokalen Ende (36) und einem zweiten lokalen Ende (37) einer Wand (13) des Hauptkanals (5) definiert ist, wobei das erste lokale Ende (36) eine Keilform hat und das zweite lokale Ende (37) eine Form eines rechten Winkels hat.

8. Fluidzähler (1) nach Anspruch 7, bei dem eine Kante (38) des zweiten lokalen Endes (37) näher am Hauptkanal (5) ist als eine Kante (39) des ersten lokalen Endes (36).

## Claims

1. A fluid meter (1) including a main channel (5) and a flow rate measurement device (8a, 8b, 9) for measuring the flow rate of a fluid flowing in the main channel (5), the fluid meter (1) further including a fluid composition measurement device (10) comprising:
• partitions (15a, 15b, 16a, 16b, 17, 18) defining a chamber (14);
• at least one inlet orifice (27a, 27b) formed in one of the partitions, the inlet orifice being arranged so that a portion (30a, 30b) of the fluid penetrates into the chamber (14);
• an infrared emitter (25) and an infrared receiver (26) situated in the chamber and arranged to measure the composition of the portion of the fluid (30a, 30b) by infrared spectroscopy, the inlet orifice (27a, 27b) opening out into the chamber in the proximity of the infrared emitter (25) or of the infrared receiver (26);
• a duct (32) putting the chamber (14) into communication with the main channel (5), the duct (32) being arranged so that the portion of the fluid (30a, 30b) is sucked from the chamber by the Venturi effect in order to escape from the chamber and penetrate into the main channel (5), the duct (32) opening out into the main channel upstream from the inlet orifice and upstream from the flow rate measurement device (8a, 8b, 9).

2. A fluid meter (1) according to claim 1, including a first inlet orifice (27a) opening out into the chamber (14) in the proximity of the infrared emitter (25) and a second inlet orifice (27b) opening out into the chamber in the proximity of the infrared receiver (26).

3. A fluid meter (1) according to claim 2, wherein the partitions comprise two mutually parallel first partitions (15a, 15b) and a second partition (16a) perpendicular to the two first partitions, the infrared emitter and the infrared receiver each being positioned on a distinct of the two first partition (15a, 15b), the first inlet orifice (27a) and the second inlet orifice (27b) being made in the second partition (16a), the first inlet orifice (27a) opening out into the chamber (14) in register with the infrared emitter (25) and the second inlet orifice (27b) opening out into the chamber (14) in register with the infrared receiver (26).

4. A fluid meter (1) according to claim 1, wherein the partitions include an internal partition (18) with an opening (21) and that subdivides the chamber (14) into a first compartment (14a) and a second compartment (14b), the infrared emitter (25) and the infrared receiver (26) being positioned in the first compartment (14a), the duct (32) opening out into the second compartment (14b).

5. A fluid meter (1) according to claim 4, wherein the opening (21) of the internal partition (18) is formed in a central portion of the internal partition (18).

6. A fluid meter (1) according to claim 1, wherein an upstream section (S1) of the main channel (5) upstream from and in the proximity of the duct (32) is smaller than a downstream section (32) of the main channel (5) downstream from and in the proximity of the duct (32).

7. A fluid meter (1) according to claim 1, wherein the duct (32) is a slot defined between a first local end (36) and a second local end (37) of a wall (13) of the main channel (5), the first local end (36) having a chamfer shape and the second local end (36) having a right angle shape.

8. A fluid meter according to claim 7, wherein an edge (38) of the second local end (37) is closer to the main channel (5) than an edge (39) of the first local end (36) .
